# EUROPEAN PATENT APPLICATION

(11) **EP 1 811 485 A2**
(43) Date of publication of application: **25.07.2007**
(21) Application number: 07250205.7
(22) Date of filing: 18.01.2007
(51) Int. Cl.: G09F 19/22, G09F 21/06

(54) **A method of allocating advertising space and system therefor**

(30) Priority: 18.01.2006 AU 2006900262
(71) Applicant: Winton, Karen Pamela, Sydney NSW 2000 (AU)
(72) Inventor: Winton, Andrew, Sidney, NSW 2000 (AU)
(74) Representative: Merrifield, Sarah Elizabeth

(57) **Abstract**

A built structure (10) having an upward facing surface; which supports a first image (11) is described. The upward facing surface is overlaid by the first image (11) in the form of first upwardly facing advertising indicia. The first image (11) is arranged for visibility from craft (13) passing over the built structure (10) and so as to be discernable by observers in the craft (13) when the craft (13) is within a predetermined legibility distance of the built structure (10). Revenue is derived from the upward facing surface. The first image (11) comprises an active image in communication with a local controller whereby the image (11) can be replaced by loading a fresh image from a local controller; and where the local controller is in communication with a remote computer (110) adapted to communicate at least the first image to the local controller.

Also disclosed is a method of deriving revenue from advertising space, the method comprising the steps of: procuring an upward facing surface and obtaining signage rights to the surface; offering to a third party the surface as a platform for advertising indicia for a predetermined period of time; procuring the application of the advertising indicia to the surface in such manner as to be observable from craft (13) passing over the surface at a predetermined legibility distance. The advertising indicia comprises an active image (11) in communication with a local controller whereby said image (11) can be replaced by loading a fresh image from the local controller which is in communication with a remote computer (110) adapted to communicate the image (11) to the local controller.

## Description

The present invention relates to the commercialization and application of images on roof surfaces for the purpose of advertising products, services, corporate names or the like to viewers in over-flying craft or the like.

### BACKGROUND

In the competitive world of advertising there is a continual search for available space which may be used to bring a product, service or corporate name to the attention of the public. In many cases this drive to advertise has led to an overcrowding of signage in public places, often to the detriment of the environment and a devaluation of impact of an individual advertising image.

It is an object of the present invention to address or ameliorate one or more of the abovementioned disadvantages or at least provide a useful alternative.

### BRIEF DESCRIPTION OF THE INVENTION

In this specification the term "craft" is to be interpreted broadly to include most if not all forms of device for conveying persons above or over the top of built structures. In particular forms this will include aircraft. In an alternative form this can include space craft.

Accordingly, in one broad form of the invention there is provided a built structure having an upward facing surface; said built structure supporting a first image; said upward facing surface overlaid by said first image in the form of first upwardly facing advertising indicia; said first image arranged for visibility from craft passing over said built structure and so as to be discernable by observers in said craft when said craft is within a predetermined legibility distance of said built structure; and wherein revenue is derived from said upward facing surface; and wherein said first image comprises an active image in communication with a local controller whereby said image can be replaced by loading a fresh image from a local controller; and where said local controller is in communication with a remote computer; said remote computer adapted to communicate at least said first image to said local controller.

Preferably said first image is supported on a support structure which, in turn, is supported on said upward facing surface.

Preferably said first image is formed on or in a flexible planar material.

Preferably said flexible planar material comprises electronic digital paper.

Preferably said revenue is a function of a cone of legibility; said cone comprising an inverted conical section of a sphere whose generator is equal to the distance of resolution of the smallest discrete detail of said image as observed from said craft.

Preferably said revenue is derived by the steps of:
(a) procuring said upward facing surface and obtaining signage rights to said surface;
(b) offering to a third party said surface as a platform for said first and second advertising indicia for a predetermined period of time.

Preferably said revenue is derived therefrom by the steps of procuring the application of said first advertising indicia to said surface in such manner as to be observable from craft passing over said surface at a predetermined legibility distance; wherein said predetermined legibility distance is defined by and lies within the volume of said cone of legibility.

In a further broad form of the invention there is provided a built structure having an upward facing surface; said built structure supporting a first image and a second image; said upward facing surface overlaid by said first image in the form of first advertising indicia; said first image arranged for visibility from overflying craft; and wherein revenue is derived from said upward facing surface; and wherein said revenue is a function of a cone of legibility; said cone comprising an inverted conical section of a sphere whose generator is equal to the distance of resolution of the smallest discrete detail of said image; said second image in the form of a substantially vertically oriented sign having second advertising indicia thereon adapted for viewing from ground level and for which separate signage rights may be negotiated; said upwardly facing surface mechanically associated with both said first image and said second image.

Preferably said first image and said second image are supported on a support structure which, in turn, is supported on said upward facing surface.

Preferably said first image and said second image comprise an active image in communication with a local controller whereby each respective image can be replaced by loading a fresh image from a local controller.

Preferably said local controller is in communication with a remote computer; said remote computer adapted to communicate one or more of said first image and said second image to said local controller.

Preferably said second image are formed on or in a flexible planar material.

Preferably said flexible planar material comprises electronic digital paper.

Preferably said predetermined legibility distance is in the range 100 - 2 000 feet.

Preferably said predetermined legibility distance is in the range 100 - 10 000 feet.

Preferably said predetermined legibility distance is in the range 30,000 - 40,000 feet.

Preferably said predetermined legibility distance is in the range 50km to 100km.

Preferably said built structure is a roof.

Preferably said built structure is a pontoon.

Preferably said revenue is derived by the steps of:
(a) procuring said upward facing surface and obtaining signage rights to said surface;
(b) offering to a third party said surface as a platform for said first and second advertising indicia for a predetermined period of time.

Preferably said revenue is derived therefrom by the steps of procuring the application of said first advertising indicia to said surface in such manner as to be observable from craft passing over said surface at a predetermined legibility distance; wherein said predetermined legibility distance is defined by and lies within the volume of said cone of legibility.

In a further broad form of the invention there is provided a system for the application of an image to an upper surface of a built structure, said image arranged for visibility from craft; passing over said built structure and wherein said image comprises an active image in communication with a local controller whereby said image can be replaced by loading a fresh image from a local controller; and where said local controller is in communication with a remote computer; said remote computer adapted to communicate said first image to said local controller.

Preferably said upper surface comprises a rooftop.

Preferably said image defines a cone of legibility.

Preferably said image is displayed for a predetermined time at a predetermined revenue rate.

Preferably said image is displayed for a time period in the range of 1 to 12 months.

Preferably said image is displayed for a time period in the range of 1 to 5 years.

Preferably said image is displayed for a time period in the range of 1 to 10 years.

Preferably said image is in the form of a company name or logo.

Preferably said image is displayed in the form of an advertisement for a product or service.

Preferably a step of commercialization includes leasing of space on said rooftops.

Preferably said space is made available on a commercial basis to third parties for the display of advertising indicia thereon.

Preferably said image is displayed in the form of textual or graphic information.

Preferably said image comprises a series of images displayed consecutively.

Preferably said image is a moving image.

Preferably said image is applied as a film.

Preferably said image is applied by way of projection onto said rooftops.

Preferably a subtended angle of a cone of legibility is determined according to a parameter based on roof surface texture and discontinuities of the roof surface.

Preferably the commercial value of an advertisement applied to said rooftops is a function of the cone of legibility.

Preferably the commercial value of said image is a function of the number and characteristics of aircraft flight paths intersecting said cone.

Preferably each said image is applied as paint by an applicator adapted to traverse a roof surface.

Preferably each said image is formed from an array of coloured panels, segments, dots or pixels.

Preferably the panels, segments, dot or pixel size and spacing is determined according to information theory.

Preferably the resolution of each said image allows for roof discontinuities such as sky lights.

Preferably the resolution of each said image allows for roof discontinuities such as changes of roof angle.

Preferably each said image is provided with day and/or night time illumination.

Preferably said applicator is in modular form arranged to be lifted to a rooftop in sections for reassembly.

Preferably the applicator is provided with traversing means for progressively applying an image to a roof surface.

Preferably said applicator is provided with a rail system arranged to guide said applicator over an expanse of roof.

Preferably the applicator is provided with support wheels and propulsion means.

In a further broad form of the invention there is provided a method of allocating advertising space, the method comprising the steps of:
(a) Procuring a roof surface and obtaining signage rights to the roof surface;
(b) Offering the roof surface as a platform for advertising indicia for a predetermined period of time;
(c) Procuring the application of the advertising indicia in such manner as to be observable from over flying craft; and wherein said advertising indicia comprise an active image in communication with a local controller whereby said image can be replaced by loading a fresh image from a local controller; and where said local controller is in communication with a remote computer; said remote computer adapted to communicate said image to said local controller.

In yet a further broad form of the invention there is provided an upper surface of a built structure incorporating indicia thereon or therein; said indicia constructed so as to be discernable by observers in a craft passing over said built structure when said craft is within a predetermined legibility distance of said built structure; and wherein said indicia comprises an active image in communication with a local controller whereby said image can be replaced by loading a fresh image from a local controller; and where said local controller is in communication with a remote computer; said remote computer adapted to communicate said image to said local controller.

Preferably said predetermined legibility distance is in the range 100 - 2 000 feet.

Preferably said predetermined legibility distance is in the range 100 - 10 000 feet.

Preferably said predetermined legibility distance is in the range 30 000 - 40 000 feet.

Preferably said predetermined legibility distance is in the range 50km to 100km

Preferably said predetermined legibility distance is defined by and lies within the volume of a cone of legibility.

Preferably said built structure is a roof.

Preferably said built structure is a pontoon.

In yet a further broad form of the invention there is provided a method of deriving revenue from advertising space, the method comprising the steps of: procuring an upward facing surface and obtaining signage rights to the surface; offering to a third party the surface as a platform for advertising indicia for a predetermined period of time; procuring the application of the advertising indicia to said surface in such manner as to be observable from craft passing over said surface at a predetermined legibility distance; and wherein said advertising indicia comprise an active image in communication with a local controller whereby said image can be replaced by loading a fresh image from a local controller; and where said local controller is in communication with a remote computer; said remote computer adapted to communicate said image to said local controller.

Preferably said revenue is directly linked to the benefit derived by said third party from the visibility and discernability of said indicia to viewers in said craft as it passes over said surface at said predetermined legibility distance.

In yet a further broad form of the invention there is provided a surface to which the method as described above is applied.

In yet a further broad form of the invention there is provided a method for determining characteristics of advertising indicia to be applied to an upward facing surface of a built structure; said method including the steps of:
(a) determining the area of said upper surface available,
(b) determining the angle of said upper surface to the horizontal plane,
(c) determining a maximum size of elements of said indicia to be displayed,
(d) storing said area, said angle and said maximum size of elements in a computer memory. and wherein said advertising indicia comprise an active image in communication with a local controller whereby said image can be replaced by loading a fresh image from a local controller; and where said local controller is in communication with a remote computer; said remote computer adapted to communicate said image to said local controller.

Preferably said method includes the further step of determining a cone of legibility; said cone comprising an inverted conical section of a sphere whose generator is equal to the distance of resolution of the smallest discrete detail of said indicia; said method including the steps of:
(a) retrieving from said computer memory said area, said angle and said maximum size of elements,
(b) construction of a 3-dimensional computer model of said space,
(c) positioning a digital representation of said advertising indicia on said space,
(d) empirically determining parameters of maximum distance and angle of inclination at which said indicia may be resolved by the naked eye by scaling and spatial rotation of said 3-dimensional computer model;

Preferably said method further including determining the number and characteristics of craft flight paths intersecting said cone of legibility.

Preferably said advertising indicia is applied to said surface in such manner as to be observable from aircraft passing over said surface at a predetermined legibility distance; wherein said predetermined legibility distance is defined by and lies within the volume of said cone of legibility.

Preferably said upper surface comprises a rooftop.

Preferably a commercial value of said advertising indicia applied to said rooftop is a function of said cone of legibility.

Preferably said commercial value of said advertising indicia applied to said rooftop is a function of said number and characteristics of said flight paths intersecting said cone of legibility.

Preferably said indicia are displayed for a predetermined time at a predetermined rate.

Preferably said upward facing surface are procured and offered to a third party as a platform for display of said indicia.

### BRIEF DECRIPTION OF THE DRAWINGS

Figure 1 is an illustration of a roof top displaying an image as it may be seen from an aircraft in accordance with a first preferred embodiment of the present invention.
Figure 2 shows a cone of visibility relative to the roof and image of Figure 1.
Figure 3 is a perspective view of an image applicator traversing a roof section for the creation of an image of the type shown in Figure 1.
Figure 4 is an illustration of a relationship between the effective areas of pixels and interpixel spacing as used to form an image of the type shown in Figure 1,
Figure 5 is a flow chart of an exemplary leasing/renting procedure for use in accordance with a particular example of embodiments of the present invention,
Figure 6 is a flow chart of a valuation method in accordance with an example of embodiments of the present invention,
Figure 7 is a flow chart of an advertiser valuation method in accordance with a further example of embodiments of the present invention, and
Figure 8 illustrates an application of an example of the present invention to a floating pontoon in association with an adjacent airport facility.
Figure 9 illustrates a built structure having first and second images applied to it in accordance with a preferred embodiment for the invention,
Figure 10 is a diagram of a built structure having two images applied to it in accordance with a further embodiment for the present invention,
Figures 11 and 11a illustrate support structures to which images may be applied, and
Figure 12 illustrates diagrammatically embodiments of the invention implemented on a computer platform.
Figure 13 illustrates diagrammatically an automated signage system in accordance with a further embodiment of the present invention,
Figure 14 illustrates a particular implementation of the system of Figure 13,
Figure 15 illustrates an alternative particular implementation of the system of Figure 13,
Figure 16 illustrates an alternative particular implementation of the system of Figure 13,
Figure 17 illustrates an alternative particular implementation of the system of Figure 13.

### DETAILED DESCRIPTION OF PREFERRED EMBODIMENTS

Embodiments of the invention will now be described in detail with reference to the accompanying drawings.

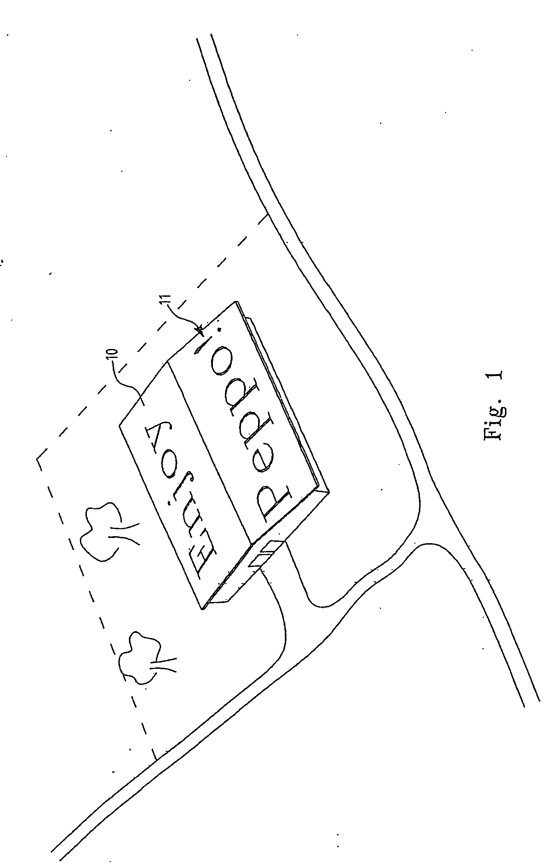

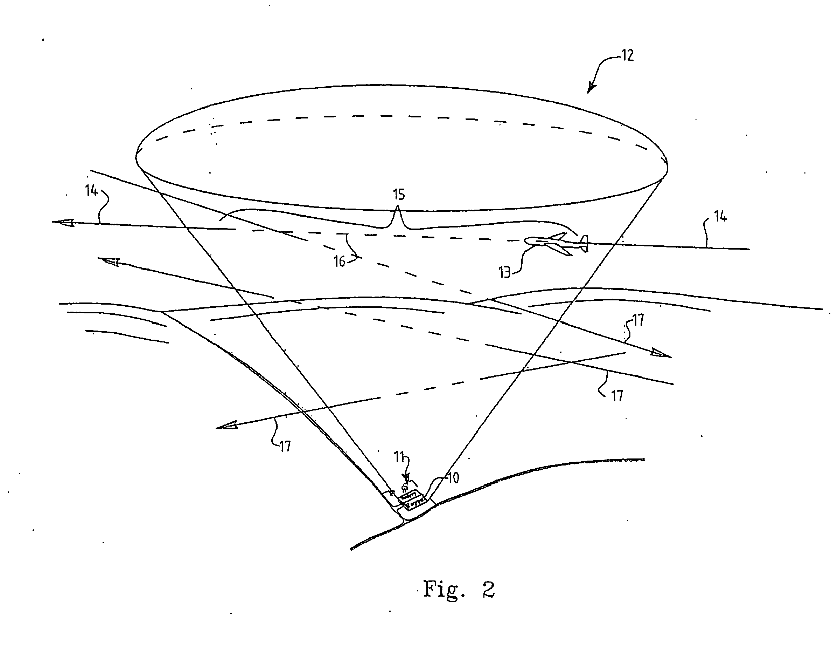

In Figure 1 a roof 10 has an image 11 applied to it. Roof 10 is oriented such that its surface is readily visible from an aircraft 13 flying a path through a "cone of legibility" 12 as shown in Figure 2.

The cone of legibility 12 is a function of the smallest discrete detail which is considered useful to the impact and intelligibility of the image 11. The dimension of the cone is then determined by the distance at which the unaided human eye can resolve that detail.

In one form, cone 12 is an inverted conical section of a sphere whose generator is equal to the distance of resolution of the smallest discrete detail of the image 11. The subtended angle of the cone is also determined by the minimum inclination at which the image can be resolved. The determination of the angle may include a parameter based on the nature of the roof surface and discontinuities of that surface.

The apex of the cone is centered on the image. Figure 2 shows a cone of legibility 12 relative to roof 10 and image 11 with an aircraft 13 on flight path 14 intersecting the cone for a distance 15 as shown by dashed line 16. Also in Figure 2 are shown other flight paths 17 which are known to pass through the cone.

The size of the cone of legibility, the number of flight paths, number and types of aircraft passing through the cone as well as the duration of each such passage, are contributing factors to the commercial value of the image.

In use, the commercial value of a roof space and a proposed image may be calculated from the cone of legibility, local flight paths intersecting the cone, flight frequencies and durations, types of aircraft and other relevant data.

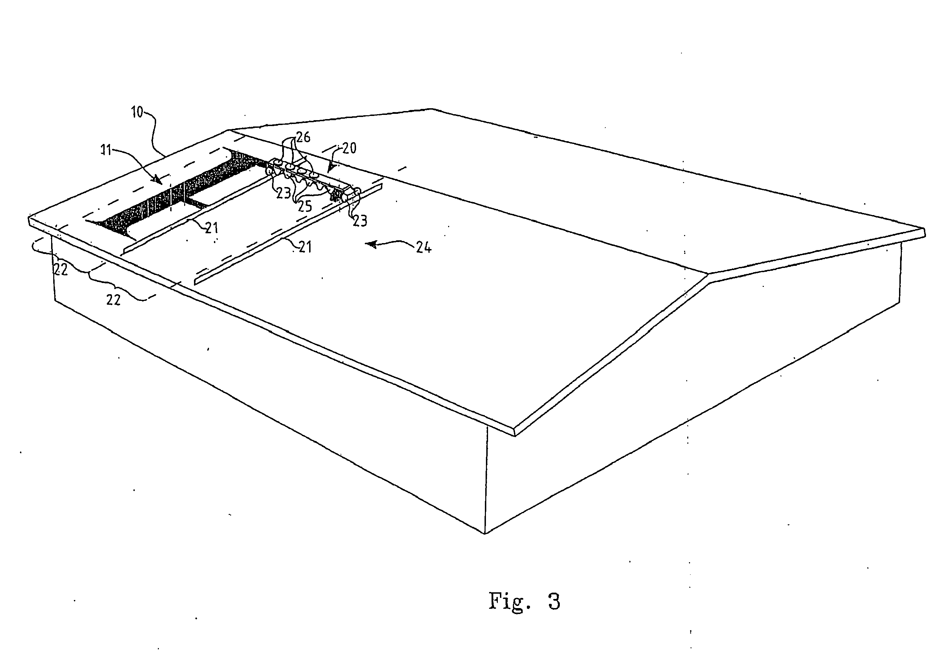

Figure 3 illustrates the general principle according to which an image may be applied to a roof surface 10. An applicator 20 is arranged to follow a parallel rail system 21. Rail system 21 is relocated to allow respective bands 22 of image 11 to be applied.

In a preferred embodiment applicator 20 is in the form of a beam structure straddling the guide rails 21 comprising rail system 24 and provided with support wheels 23 and drive means to propel the applicator along the guide rails. The beam structure is provided with a plurality of nozzles 25, paint reservoirs 26 and control means to direct paint to selected nozzles according to a control program based on the digitized image to be applied.

In a further preferred embodiment the applicator is of modular construction to allow it to be lifted to the roof in sections. Its modular construction is further adapted to allow multiples of beam segments to be joined together to provide various lengths of beam to suit different roof and image sizes.

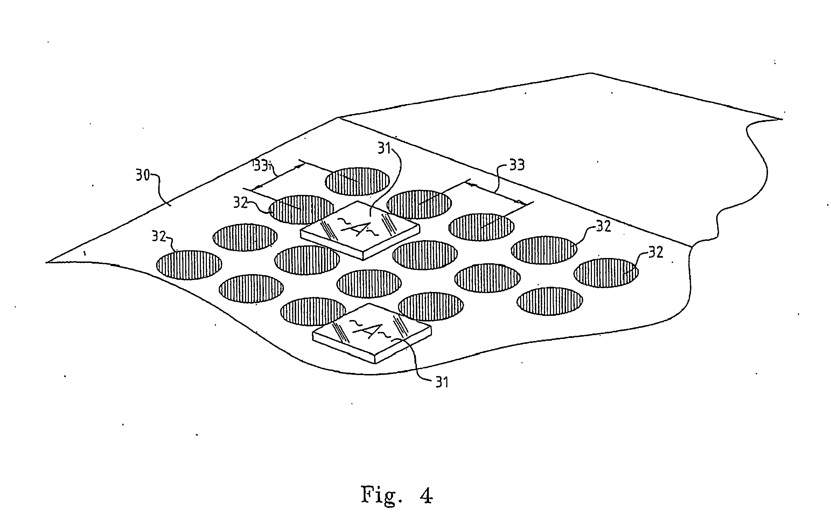

In a further preferred embodiment the image is made up of pixels. The pixel size and interpixel spacing are determined according to the principles of information theory and are functions of the roof size and image detail as well as discontinuities in the roof surface. By way of a non limiting example, figure 4 illustrates some of these relationships where a roof surface 30 has discontinuities in the form of skylights 31 of surface area "A". Pixels 32 are then selected as having surface area A/2 with interpixel spacing 33 a percentage of pixel diameter "D".

In use, the image to be applied is digitized and segmented into parallel bands 22, if required, for an applicator to cover the surface area of the image. By means of software, the digitized image is translated into a control program for the dispensing of different coloured paints from the applicator nozzles as it traverses a roof section.

Also in use in commercial applications a typical commercial implementation involves the steps of:
1. Procuring a roof surface and obtaining signage rights to the roof surface;
2. Offering the roof surface as a platform for advertising indicia for a predetermined period of time;
3. Procuring the application of the advertising indicia in such manner as to be observable from over flying aircraft.

The above describes only some embodiments of the present invention and modifications, obvious to those skilled in the art, can be made thereto without departing from the scope and spirit of the present invention.

For example, it is to be understood that the image to be applied to the rooftop can be applied in many ways other than by direct physical application. For example, the image may be applied indirectly as a separate layer overlaid upon the rooftop. In alternative forms the image may be applied indirectly by, for example, the projection of light onto the rooftop.

In yet other forms the image may be applied as an "active" image, which is to say in the form of a light emitting system such as can be provided by an array of lights, a CRT panel or the like.

Furthermore, analogous built structures may act effectively as rooftops for the purpose of forming a base for advertising display of the kind envisaged in this specification.

Specific examples of implementations of procedures compatible with one or more of the described embodiments will now be provided in detail:

### Example 1 - method of deriving revenue

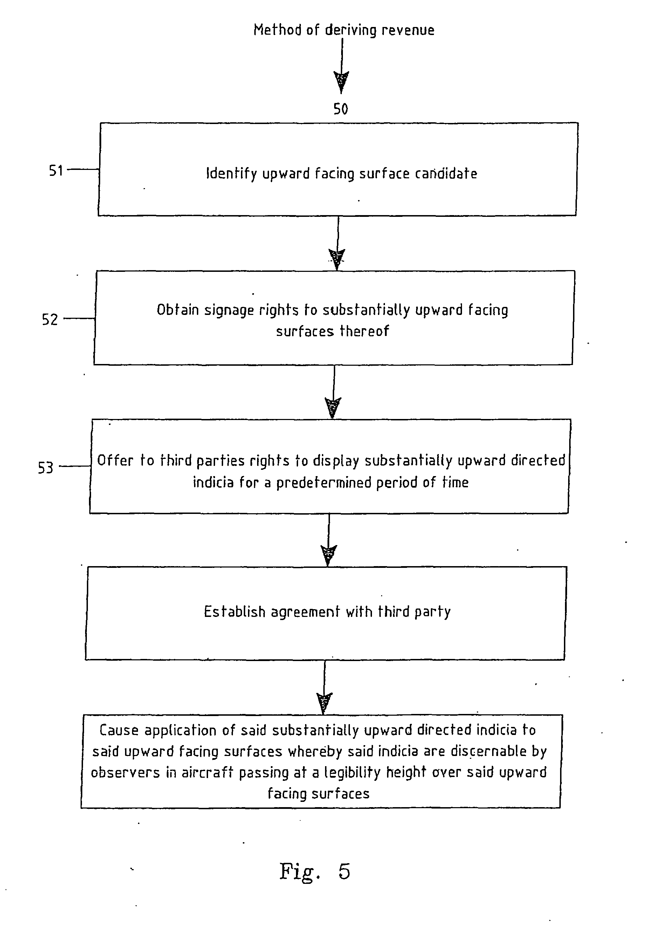

With reference to Figure 5 a basic renting/leasing procedure is demonstrated in block diagram form.

In this arrangement the steps in a method 50 of deriving revenue from an upward facing surface are put into effect by the following steps:

In a first step 51 an upward facing surface is identified as a potential candidate to receive indicia thereon for viewing at a legibility distance by observers in an overflying craft. In typical instances this upward facing surface may be located near an airport but can be located elsewhere subject only to satisfying the basic requirement that the surface can be viewed by overflying craft and that indicia can be applied in a way such that they are made visible and discernable to observers in the craft looking down upon the upward facing surface and, more particularly, the indicia thereon.

In second step 52 signage rights are negotiated to the upward facing surface. In some instances it may be that the surface is, for example, a rooftop surface which already has a substantially vertically disposed sign thereon adapted for viewing from ground level. Any rights third parties may have to the substantially vertically disposed signage can be thought of as completely independent from rights to be negotiated for the substantially upward facing surfaces upon which, indeed, the substantially vertical sign may sit. It is conceivable in some instances that the substantially vertically oriented sign may remain and not interfere with indicia placed on the upward facing surfaces and for which separate signage rights may be negotiated in accordance with step 52.

Having negotiated signage rights both rights can be offered to third parties in a third step 53, usually for a predetermined period of time.

Once these basic steps have been performed agreement with the third party can be formalized and then given effect by causing the application of substantially upwardly directed indicia to the upward facing surfaces whereby the indicia are discernable by observers in craft passing over the upward facing surfaces at a legibility height.

### COMBINED VERTICAL AND HORIZONTAL SIGN DISPOSITION

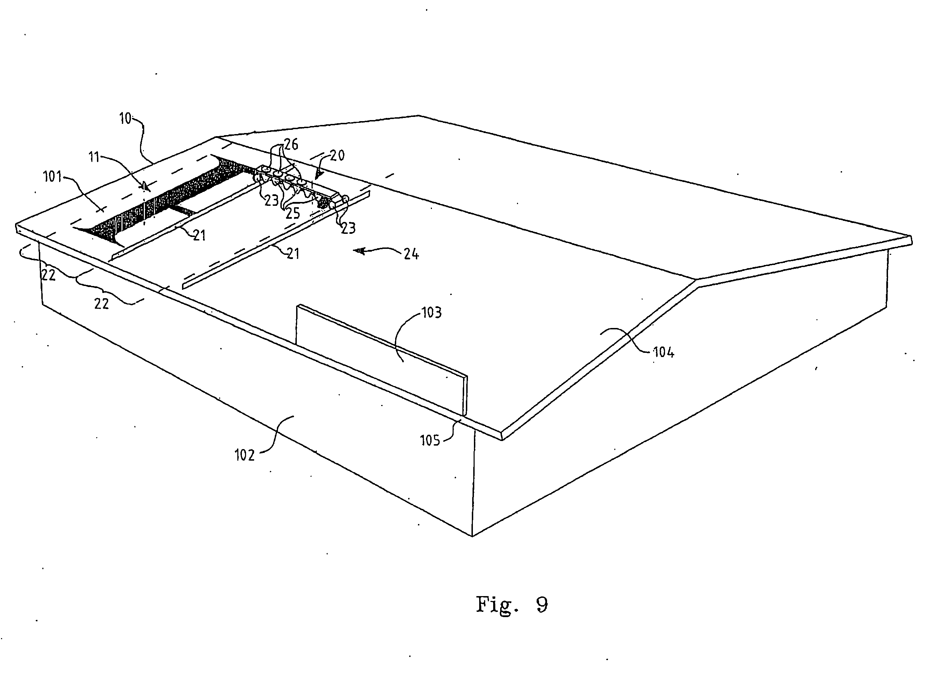

By way of specific example Fig 9 illustrates the use of a first substantially upward facing image 101 applied to built structure 102 in conjunction with a second substantially horizontally facing image 103 also mechanically associated with built structure 102 and, more particularly the facing surface 104. In this instance the second image 103 forms part of a sign structure mechanically connected to and projecting substantially upwardly from each portion 105 of upwardly facing surface 104.

### INTERPOSED MECHANICAL SIGN SUPPORT

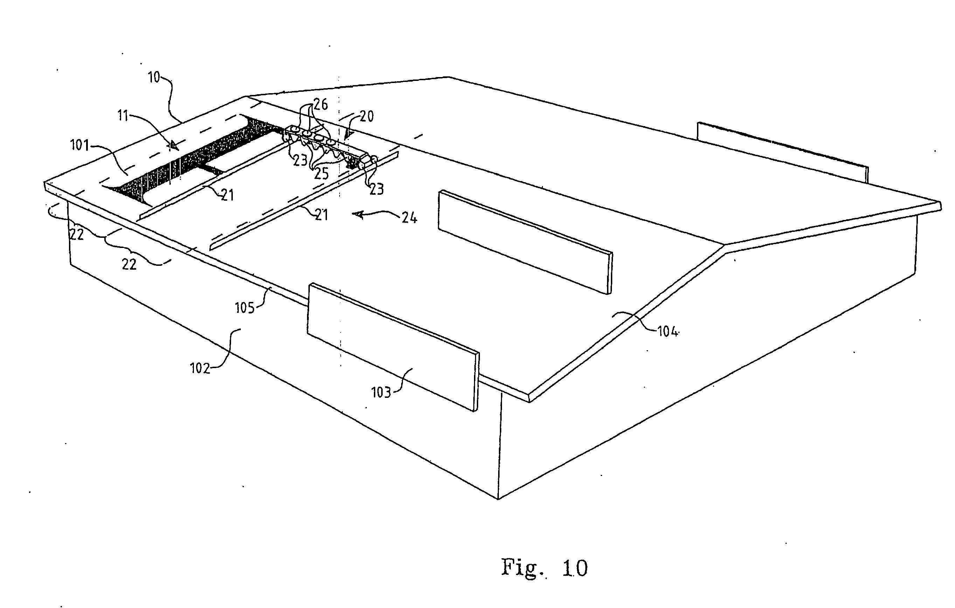

With reference to Fig 10 a further embodiment of a dual image arrangement is illustrated wherein like components are numbered as for Fig 9. In this instance second image 103 forms part of a signage structure which projects substantially vertically downwardly from each portion 105 of upwardly facing surface 104 and is mechanically anchored thereto.

The arrangement of Figs 9 and 10 permits increased utilization of upwardly facing surface 104 for signage purposes.

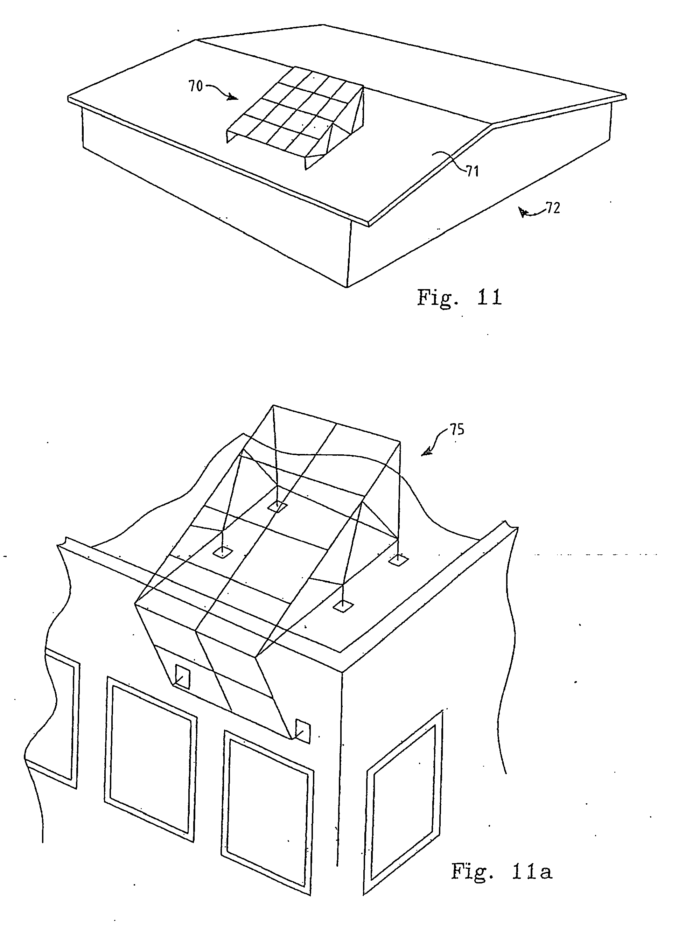

With reference to Fig 11, signage may be applied to a permanent support structure or lattice 70 mounted to an upward facing surface 71 of a built structure 72. Such a lattice allows the ready exchange of indicia printed onto sheeting (not shown). In at least one preferred form of the invention, the same or related indicia printed on sheet material, may be applied to a combined lattice structure 75 (as shown in Fig 11a) exposing the indicia both to observers in over-flying aircraft and observers at ground level or in nearby buildings.

Apart from offering a more convenient means of exchanging advertising indicia, a further advantage offered by a supporting lattice or support is that the aspect of the support may be tilted to optimize the visibility of the applied indicia independent of the slope of the upwardly facing surface of the built structure. Thus the axis of a cone of legibility may be inclined at any desired angle to maximize exposure of the indicia to a particular flight path or bundle of flight path situations.

Sheeting to which indicia has been applied, for example by a suitable printing process, may be releasably fastened to the support lattice by any suitable fastener system, such as screws or nuts and bolts or by means of clamps incorporated in the lattices structure.

An alternative means of using the structure for display of interchangeable indicia may be provided by the indicia being applied to flexible sheeting wound onto a roller assembly in the manner of a Holland blind. One or more fixtures for support of one or more roller assemblies can be provided at an upper edge of the lattice structure thus allowing a rapid exchange of advertising indicia to be effected.

### Example 2 - value to an advertiser

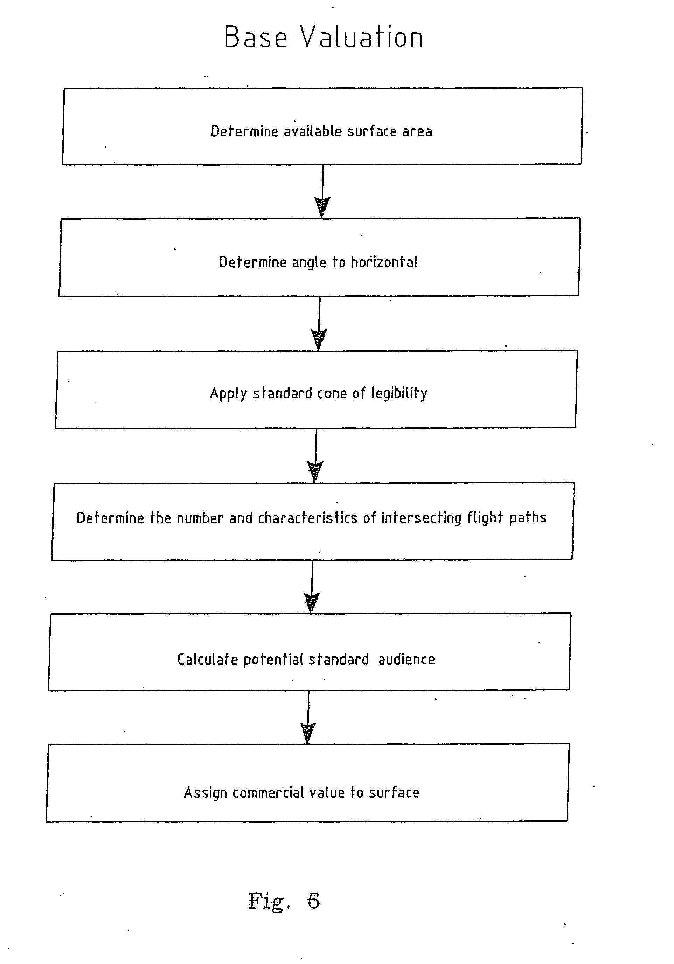

With reference to Figure 6 a surface available for advertising purposes has a surface area Am² and is angled at α° to the horizontal. A potential client wishes to display a certain logo in the form of a text string which, to fit in the available area, demands that the letters of the logo have a maximum height of x metres.

Several factors then need to be taken into account in determining the maximum resolution distance and maximum angle of inclination to the roof surface at which the logo can be resolved by the naked eye including:
(a) the maximum text height,
(b) the colours of the logo text and background to give a contrast factor,
(c) the texture and any discontinuities of the roof surface or the texture of sheeting or other media (if the logo is not to be applied directly to the existing roof surface).

These parameters of distance and angle may be determined empirically by reference for example to suitable computer modeling of the logo and roof surface area with scaling and spatial rotation of the image to simulate its appearance and legibility at various viewing distance and angles.

With these parameters established the cone of legibility is defined and any intersecting flight paths, their frequencies and passenger densities may be determined. The value then of the roof space for advertising purposes can be calculated on the basis of the number of potential viewers over a given period.

Not all potential viewers need be valued equally however; for example a large passenger jet passing through the cone on a descent towards landing at an average height of 500ft will have greater value than a similar jet passing through the cone at for example 5,000ft even if the passengers of both jets would be able to resolve the logo.

Furthermore, the cone of legibility may contain flight paths which are curved and during the transit of which an aircraft is banked so as to afford the maximum viewing potential of the rooftop to at least half of its passengers.

Thus scaling factors may be introduced which take account of the actual average distance from the roof and the benefits of any curvature of a flight path as inputs into the calculations of the value of an advertising space.

In this example the valuation is performed for the benefit of the potential advertiser in that an assessment may now be made as to whether the cost of leasing the space is warranted in view of the potential audience which may view the advertiser's logo over the period of the lease.

### Example 3 - value to a leasing agent and surface owner

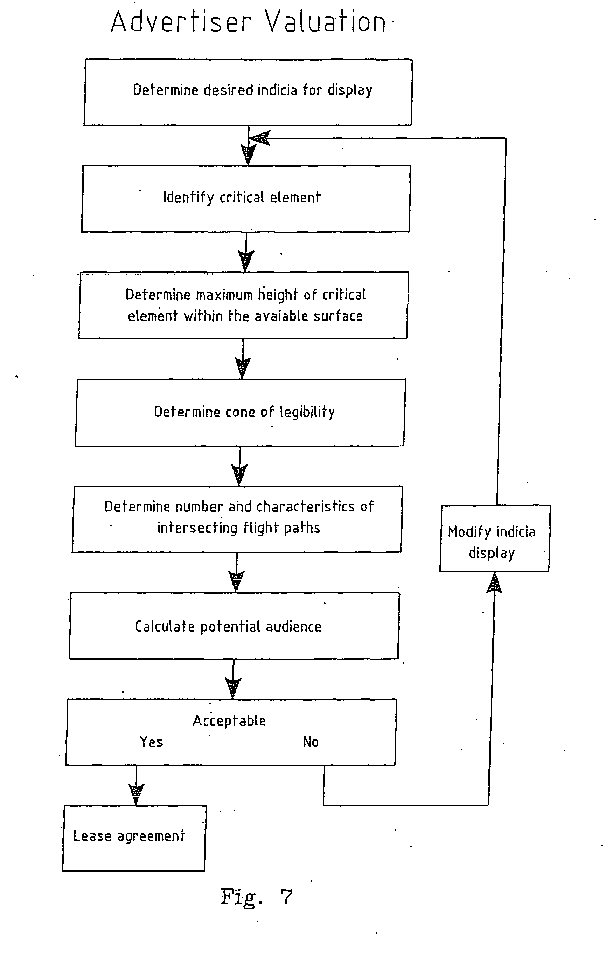

With reference to Figure 7 clearly, the larger the indicia applied to a given surface the larger will be the cone of legibility and the potential viewing audience, other factors being equal. Therefore the method performed in Example 1 may not confer an adequate value on the surface area offered if the cone of legibility is relatively small because of small indicia specified by the advertiser.

For the purpose of assigning a base value to a given available surface area, a leasing agent may perform a similar operation as described in Example 1 but use a cone of legibility based on a standard indicia size applied to a standard surface. By applying this "standard cone" to the available surface, the potential viewing audience is ascertained from the number and characteristics of flight paths through the cone and so establish a market value for the surface.

### Example 4 - floating surface

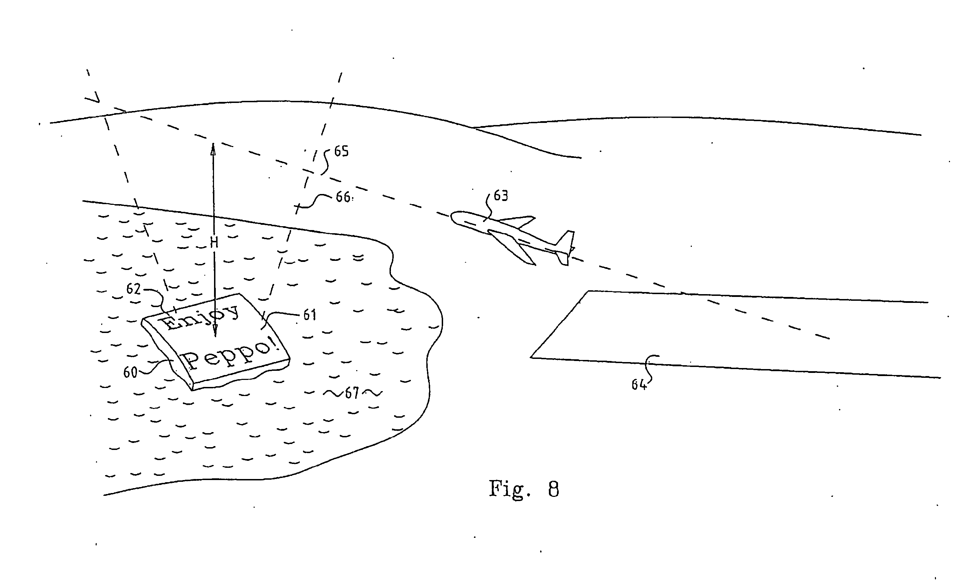

With reference to Figure 8, by way of an example intended to clarify the breadth of meaning to be given to the term "built structure" and "roof" in this specification there is illustrated a built structure 60 in the form of a pontoon or like floating structure having a substantially upwardly directed surface 61 upon which or into which indicia 62 can be inscribed and sized so as to be visible to observers in an overflying craft, in this instance aeroplane 63 during a take off or landing phase from runway 64 and following trajectory 65 which has associated with it a cone of legibility 66 associated with indicia 62 which permits the discernment of the indicia 62 by the passengers or other persons in aeroplane 63. This particular example can be used with airports which lie adjacent bodies of water 67 as shown in this example.

The predetermined legibility distance H inherent in the cone of legibility 66 associated with flight path 65 can, for example, lie in the range 100 - 2 000 feet. In alternative arrangements the predetermined legibility distance can be in the range 100 - 10 000 feet. In yet alternative arrangements the legibility distance H can be the typical cruising height range for an aircraft, typically in the range 30 000 - 40 000 feet.

### Computer Platform Implementation

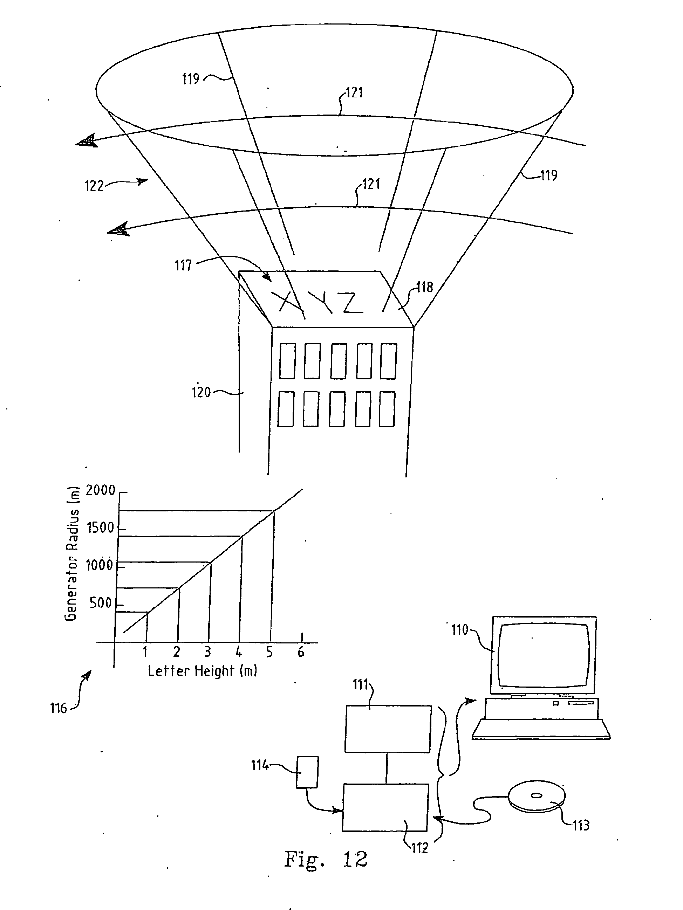

With reference to Fig 12 the methods of utilisation of a substantially upwardly facing surface as described earlier in this specification may be implemented on a computer platform 110. In this instance the platform 110 includes microprocessor 111 in communication with memory 112 and in communication with removable media 113. In use a programme 114 is loaded from the media 113 into memory 112 for execution on microprocessor 111 and subsequent display of results on display 115. The programme 114 includes reference data including a lookup table which can be represented graphically as Graph 116 whereby there is an association between letter or indicia height for upwardly facing indicia 117 on upwardly facing surface 118 and the length or radius of generator 119.

In addition for any given built structure 120 flight path information as previously described may be input either by media 113 or by other means such as download from the internet whereby all flight paths 121 which pass through a cone of legibility 122 are available to the programme 114.

A difficulty in evaluating a roof or other upwardly directed surface for the purpose of displaying advertising indicia, is the quantifying of the exposure of the indicia to observers or potential consumers of the goods or services being advertised. The present invention provides a method whereby computer modelling is used in the evaluation of such advertising spaces.

The quantification requires the determination of a region, or three dimensional volume of space, centred on the indicia, within which an observer may sufficiently resolve the indicia so as to understand its content. It is therefore postulated that this region comprises what may be called a cone of legibility.

For the purposes of this specification, a cone of legibility is a conical section of a sphere centred on the surface to be evaluated and with the axis of the cone normal to that surface. Such a notional cone may be said to be inherent to any set of indicia but without defining the limits of the cone, the number and characteristics of the potential observers cannot be determined.

The limits of legibility of the indicia, and hence the parameters of a cone of legibility, will depend on a number of factors, among which may be enumerated the texture and any discontinuities of the surface, characteristics of the indicia, a minimum angle to the surface, and maximum distance from the surface.

The combination of minimum angle and maximum distance at that angle for the purpose of this specification, defines the generator of the cone of legibility. With these parameters established, the number of observers potentially exposed to the indicia may be derived from an analysis of the flight paths and characteristics of the craft passing through the cone.

A first phase, according to the present invention, in evaluating the proposed surface, is determining the parameters of the cone of legibility and makes use of computer modelling of the above factors. With suitable graphic software, the proposed indicia are applied to a three dimensional, to-scale, computer model of the surface, making the indicia as large as the extent of the surface will permit. The model may incorporate as many of the detailed characteristics of the surface as the software permits including surface texture and discontinuities such as skylights, vents and so forth.

In this step the size of the discrete components of the indicia, such as that of individual letters or image details is determined. Where the surface under consideration may be affected by other nearby and higher structures, these should also be added to the three dimensional model.

The computer model may then be rotated in three dimensional model space and reduced in scale (by "zooming out") to simulate the appearance of the surface at increasing distances and angles. By this means the parameters of distance and minimum angle of the cone of legibility generator may be determined empirically and a representation of the cone superimposed on the model.

In a further step, the model is augmented by placing the surface and associated cone of legibility in correct orientation relative the horizontal plane, and in the correct geographical relationship with any nearby airport or flight corridor. Actual average flight paths as published on aeronautical charts are then added to the model and coded for frequency and type of aircraft.

Appropriate solid modelling software is able to compute length of the flight paths intersecting the cone and hence the duration of the passage of an aircraft along these modelled flight paths, given the typical ground speeds for the aircraft concerned. Duration, frequency and type of aircraft can provide an initial estimation of the number of observers which may be potentially exposed to the advertising indicia of the surface.

Clearly, the modelling may be refined in a number of ways to give more accurate estimations of the number of observers. For example, the actual angle of an aircraft's flight path subtended at the roof surface will affect the ease of viewing of observers on the aircraft. Ease of viewing will be minimal if the angle is 90 degrees or near 90 degrees; that is if the flight path is normal to the surface, with ease of viewing tending to optimum as the angle decreases. As well, only those passengers at window seats along that side of the plane facing towards the surface are likely to be observers.

### AUTOMATED SIGNAGE SYSTEM

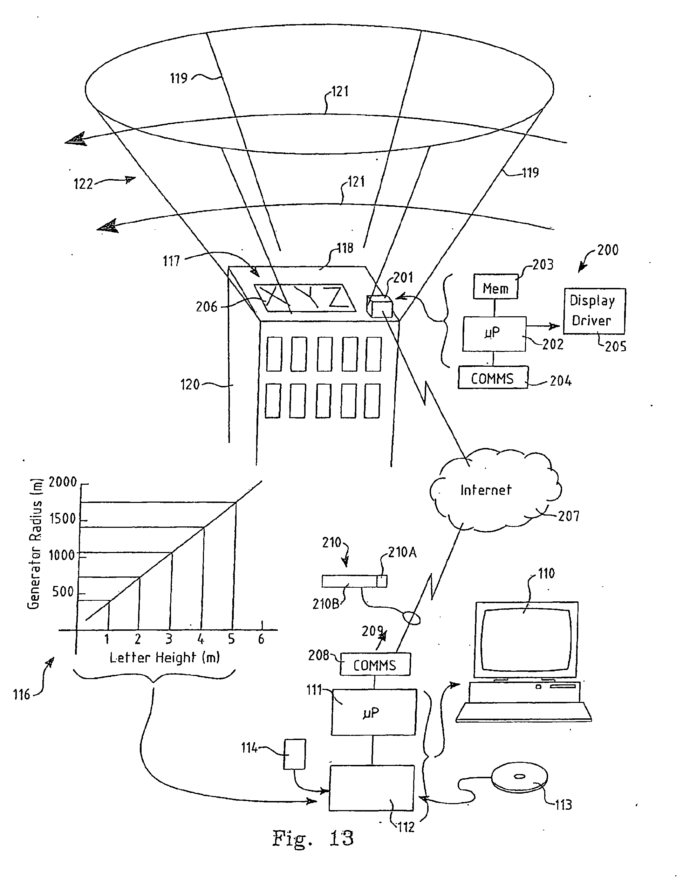

With reference to Figs 13 through to 17 the various embodiments previously referred to in this specification can be brought together to form an automated signage system 200 as shown in generalised form in Fig 13. In the embodiments illustrated in Figs 13 through to 17 like components are numbered as for previous embodiments.

In this instance the upwardly facing indicia 117 will be in the form of an "active" image as defined earlier in this specification. Being in this form it is possible to arrange the active image to be controlled electronically so as to be varied by local controller 201. Local controller 201 incorporates a processor 202 in communication with a local memory 203. The controller 201 is further adapted to communicate with a remote computer or like device by way of communications module 204 which is also in communication with global processor 202. In use processor 202 loads a predetermined active image to display driver 205 which, in turn, causes the predetermined active image 206 to be loaded for viewing as upwardly facing indicia 117.

In one form memory 203 is loaded with more than one predetermined active image 206, each image having previously been determined and its commercial value evaluated in accordance with previously described embodiments. Selected ones of the predetermined active images 206 are then displayed in accordance with a particular revenue function and as agreed with the respective entity which desires the display of the predetermined active image 206.

For example, in a simple scenario, a first image is loaded to display driver 205 for display for a first predetermined period of time followed by the loading of a second predetermined active image into display driver 205 for a second predetermined period of time following the expiry of which the first predetermined image is loaded once more and so on in cyclic fashion.

In a further form memory 203 can be loaded with predetermined active images 206 from a remote computer for example via communication enabled via the internet 207. In one particular instance a computer platform 110 can be utilised as the remote computer incorporating processor 111 and memory 112. In this instance processor 111 communicates predetermined active image data corresponding to a predetermined active image 206 via remote communications module 208 which communicates via internet 207 with local communications module 204 of local controller 201. In a preferred form the predetermined active image data 209 is transmitted in blocks 210 of digital data, each block comprising a header 210A and a data portion 210B wherein, for example, the header 210A includes IP address information of the type recognised by the TCP/IP protocol as currently used for a major portion of internet digital traffic.

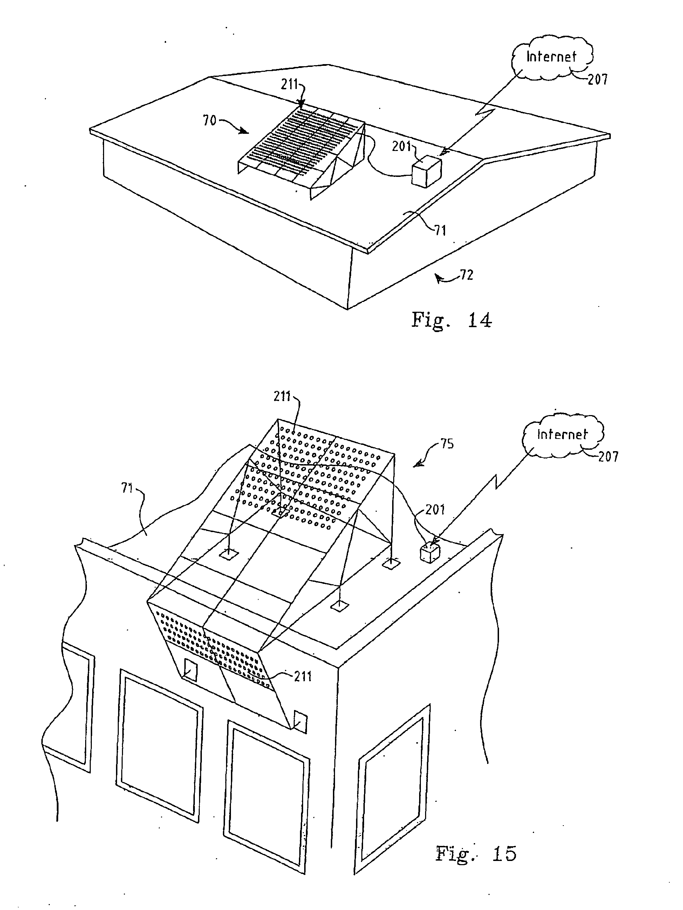

As will be described in the specific examples of Figs 14 to 17 the active image 206 may be represented as upwardly facing indicia 117 in the form of an electronically manipulable image which may itself comprise active light sources (such as the phosphors of a CRT panel) or may be of the type which requires a separate light source, to, in effect, be shone through it (as, for example, certain forms of current LED panel technology). In this second form the illumination component may only be necessary, or at least will render the image most effectively, in a darkened environment (for example at night).

With reference to Fig 14 (and when like components are numbered as for previous embodiments) the automated signage system 200 is implemented as an active LED matrix 211 mounted to support structure 70 which comprises an interposed mechanical support between the LED matrix 211 and upward facing surface 71. The LED matrix 211 is itself in electronic communication with local controller 201 thereby to be loaded with predetermined active image data in the manner previously described.

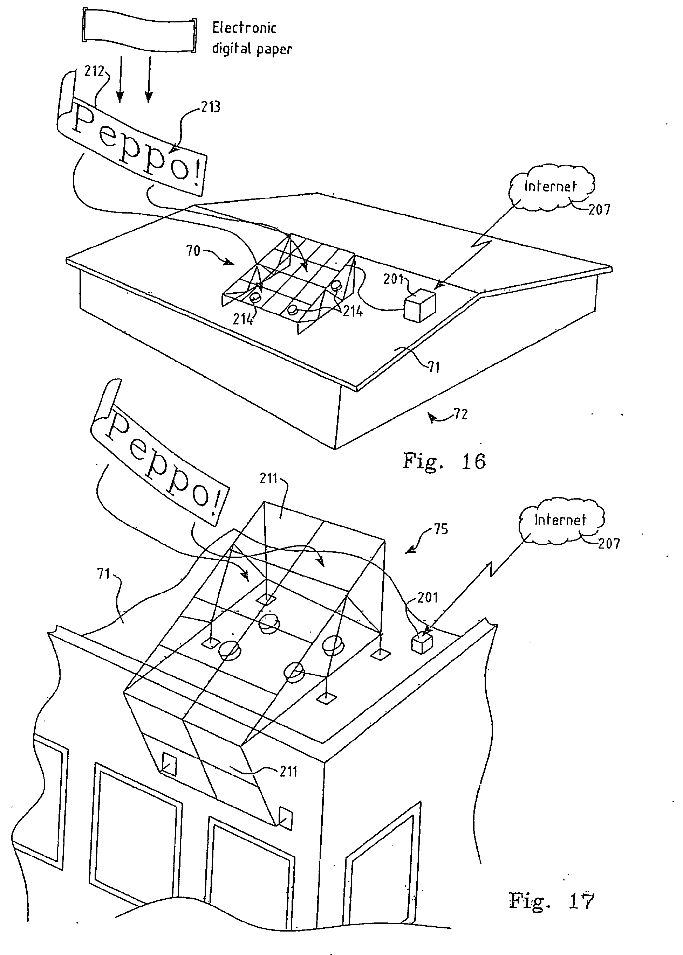

With reference to Fig 15 the active LED matrix 211 is, in this instance, affixed to support structure 75 so as to function to provide both upwardly facing indicia and outwardly facing indicia, thereby to make dual use of the available upwardly facing surface.

With reference to Fig 16 an alternative form of implementation comprises application of a flexible sheet 212 of signage material to which indicia 213 has been applied. The flexible sheet overlays and is affixed to support structure 70 which, in turn, is affixed to the upwardly facing surface 71. A light source 214 can be placed within the support structure and arranged so as to selectively shine through portions of the flexible sheet 212. The light source 214 is selectively controlled by local controller 201. A similar arrangement applies to the dual use arrangement shown in Fig 17.

In a further particular form of Figs 16 and 17 the flexible sheet 212 comprises "flexible digital paper" as for example described in United States Patent Application US20020054033, the disclosure of which is incorporated herein by cross-reference. Alternative forms of the flexible digital paper comprise a laminate incorporating an image memory function. As previously described the electronic digital paper, once placed on the support structure 70, 75 is placed in electronic communication with local controller 201 thereby to allow loading of a predetermined active image in the manner previously described.

## Claims

1. A built structure having an upward facing surface; said built structure supporting a first image; said upward facing surface overlaid by said first image in the form of first upwardly facing advertising indicia; said first image arranged for visibility from craft passing over said built structure and so as to be discernable by observers in said craft when said craft is within a predetermined legibility distance of said built structure; and wherein revenue is derived from said upward facing surface; and wherein said first image comprises an active image in communication with a local controller whereby said image can be replaced by loading a fresh image from a local controller; and where said local controller is in communication with a remote computer; said remote computer adapted to communicate at least said first image to said local controller.

2. The built structure of claim 1 wherein said first image is supported on a support structure which, in turn, is supported on said upward facing surface.

3. The built structure of claim 1 or 2 wherein said first image is formed on or in a flexible planar material.

4. The built structure of claim 3 wherein said flexible planar material comprises electronic digital paper.

5. The built structure of any previous claim; and wherein said revenue is a function of a cone of legibility; said cone comprising an inverted conical section of a sphere whose generator is equal to the distance of resolution of the smallest discrete detail of said image as observed from said craft.

6. The built structure of any one of claims 1 to 5 wherein said revenue is derived by the steps of:
(a) procuring said upward facing surface and obtaining signage rights to said surface;
(b) offering to a third party said surface as a platform for said first and second advertising indicia for a predetermined period of time.

7. The built structure of claim 6 wherein revenue is derived therefrom by the steps of procuring the application of said first advertising indicia to said surface in such manner as to be observable from craft passing over said surface at a predetermined legibility distance; wherein said predetermined legibility distance is defined by and lies within the volume of said cone of legibility.
